(19) **Europäisches Patentamt / European Patent Office / Office européen des brevets**

(11) **EP 3 762 597 B1**

(12) **EUROPÄISCHE PATENTSCHRIFT**

(45) Veröffentlichungstag und Bekanntmachung des Hinweises auf die Patenterteilung:
**31.12.2025   Patentblatt 2026/01**

(21) Anmeldenummer: **19708465.0**

(22) Anmeldetag: **27.02.2019**

(51) Internationale Patentklassifikation (IPC):
**F02D 41/00** (2006.01)    **F02D 41/38** (2006.01)
**F02D 41/40** (2006.01)    **F02D 41/14** (2006.01)
**F02D 41/24** (2006.01)

(52) Gemeinsame Patentklassifikation (CPC):
**F02D 41/401; F02D 41/005; F02D 41/1406; F02D 41/2406; F02D 41/248; F02D 41/3836; F02D 41/3845; F02D 41/40;** F02D 2041/1412; F02D 2041/1433; F02D 2200/1002; Y02T 10/40

(86) Internationale Anmeldenummer:
**PCT/EP2019/054852**

(87) Internationale Veröffentlichungsnummer:
**WO 2019/170492 (12.09.2019 Gazette 2019/37)**

(54) **VERFAHREN ZUR MODELLBASIERTEN STEUERUNG UND REGELUNG EINER BRENNKRAFTMASCHINE**

METHOD FOR THE MODEL-BASED CONTROL AND REGULATION OF AN INTERNAL COMBUSTION ENGINE

PROCÉDÉ DE COMMANDE ET DE RÉGLAGE À BASE DE MODÈLES D'UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2018   DE 102018001727**

(43) Veröffentlichungstag der Anmeldung:
**13.01.2021   Patentblatt 2021/02**

(73) Patentinhaber: **Rolls-Royce Solutions GmbH 88045 Friedrichshafen (DE)**

(72) Erfinder:
• **BERGMANN, Daniel**
  **89073 Ulm (DE)**
• **BUCHHOLZ, Michael**
  **89075 Ulm (DE)**
• **GRAICHEN, Knut**
  **90562 Heroldsberg (DE)**
• **NIEMEYER, Jens**
  **88045 Friedrichshafen (DE)**

(74) Vertreter: **Eisenführ Speiser Patentanwälte Rechtsanwälte PartGmbB Stralauer Platz 34 10243 Berlin (DE)**

(56) Entgegenhaltungen:
WO-A1-2017/005337     WO-A1-2017/094349
DE-A1- 102010 028 266     DE-A1- 102013 206 304
DE-A1- 102013 206 308     DE-A1- 102014 225 039
DE-A1- 102015 221 819     DE-A1- 102015 225 279
DE-A1- 102016 205 241

• HARDER KARSTEN ET AL: "Nonlinear MPC with emission control for a real-world off-highway diesel engine", 2017 IEEE INTERNATIONAL CONFERENCE ON ADVANCED INTELLIGENT MECHATRONICS (AIM), IEEE, 3 July 2017 (2017-07-03), pages 1768 - 1773, XP033144574, ISBN: 978-1-5090-5998-0, [retrieved on 20170821], DOI: 10.1109/AIM.2017.8014274

EP 3 762 597 B1

## Beschreibung

Die Erfindung betrifft ein Verfahren zur modellbasierten Steuerung und Regelung einer Brennkraftmaschine, bei dem in Abhängigkeit eines Moments über ein Verbrennungsmodell Einspritzsystem-Sollwerte zur Ansteuerung der Einspritzsystem-Stellglieder und über ein Gaspfadmodell Gaspfad-Sollwerte zur Ansteuerung der Gaspfad-Stellglieder berechnet werden. Ferner wird bei diesem Verfahren von einem Optimierer ein Gütemaß in Abhängigkeit der Einspritzsystem-Sollwerte und der Gaspfad-Sollwerte berechnet, vom Optimierer das Gütemaß über Veränderung der Einspritzsystem-Sollwerte und Gaspfad-Sollwerte innerhalb eines Prädiktionshorizonts minimiert und wird vom Optimierer anhand des minimierten Gütemaßes die Einspritzsystem-Sollwerte und Gaspfad-Sollwerte als maßgeblich zur Einstellung des Betriebspunkts der Brennkraftmaschine gesetzt.

Das Verhalten einer Brennkraftmaschine wird maßgeblich über ein Motorsteuergerät in Abhängigkeit eines Leistungswunsches bestimmt. Hierzu sind in der Software des Motorsteuergeräts entsprechende Kennlinien und Kennfelder appliziert. Über diese werden aus dem Leistungswunsch, zum Beispiel einem Soll-Moment, die Stellgrößen der Brennkraftmaschine berechnet, zum Beispiel der Spritzbeginn und ein erforderlicher Raildruck. Mit Daten bestückt werden diese Kennlinien/Kennfelder beim Hersteller der Brennkraftmaschine bei einem Prüfstandslauf. Die Vielzahl dieser Kennlinien/Kennfelder und die Wechselwirkung der Kennlinien/Kennfelder untereinander verursachen allerdings einen hohen Abstimmungsaufwand.

WO 2017/005337 A1 betrifft insofern ein solches, an sich bekanntes, Verfahren zum Betreiben einer Brennkraftmaschine mit Zeitskalentrennung, wobei wenigstens ein Steuermodul erster Ordnung Vorgabewerte für wenigstens ein Steuermodul zweiter Ordnung berechnet, wobei die Vorgabewerte durch das wenigstens eine Steuermodul zweiter Ordnung zur Steuerung und/oder Regelung der Brennkraftmaschine verwendet werden, wobei eine Separation von Berechnungs-schritten derart durchgeführt wird, dass durch das wenigstens eine Steuermodul erster Ordnung eine statische Berechnung von wenigstens einem ersten Prozess der Brennkraftmaschine durch-geführt wird, wobei durch das wenigstens eine Steuermodul zweiter Ordnung eine dynamische Berechnung von wenigstens einem zweiten Prozess der Brennkraftmaschine durchgeführt wird. Zielwerte fur das wenigstens eine Steuermodul erster Ordnung können durch ein übergeordnetes Koordinatormodul berechnet werden. Dabei führt das übergeordnete Koordinatormodul eine modellbasierte Berechnung, vorzugsweise Optimierung, des Betriebs der Brennkraftmaschine unter Berucksichtigung von wenigstens einem Optimierungsziel - vorzugsweise in Echtzeit - durch. Auf diese Weise ist es möglich, übergeordnete Zielvorgaben für den Betrieb der Brennkraftmaschine zu definieren und mittels des Koordinatormoduls umzusetzen. Das Koordinatormodul erhält als Anforderungen, insbesondere Forderungen eines Betreibers der Brennkraftmaschine. Insbesondere umfassen die Anforderungen bevorzugt Anforderungen an eine Drehzahl und/oder ein Drehmoment für die Brennkraftmaschine.

In der Praxis wird daher versucht den Abstimmungsaufwand durch die Verwendung von mathematischen Modellen zu reduzieren. So beschreibt zum Beispiel DE 10 2006 004 516 B3 ein Bayes-Netz mit Wahrscheinlichkeitstabellen zur Festlegung einer Einspritzmenge und DE 10 2016 205 241 A1 beschreibt ein Verfahren zum Betreiben eines Verbrennungsmotors durch Vorgabe eines Einspritzprofils, das durch angepasste Einspritzparameter definiert ist.

In DE 10 2013 206 308 A1 ist lediglich allgemein beschrieben, dass Funktionsmodelle auf Modellparametern basieren, die üblicherweise voreingestellt und die meist nach der Inbetriebnahme eines Kraftfahrzeugs nicht mehr verändert werden. Einige der Modellparameter können jedoch mithilfe einer im Steuergerät durchgeführten Online-Adaption (d.h. Adaption während des laufenden Betriebs) verändert werden, um ein sich über die Lebensdauer des Kraftfahrzeugs veränderndes Verhalten des Kraftfahrzeugs, des Motorsystems oder einer sonstigen Komponente in den Modellen zu berücksichtigen. Weiterhin soll eine Online-Adaption auch in Fällen anzuwenden sein, in denen sich aus Fertigungstoleranzen einzelner Komponenten oder unterschiedlicher Kombinationen von Komponenten leichte Abweichungen des Systemverhaltens ergeben, die in den Modellparametern berücksichtigt werden müssen. Zur Durchführung der Online-Adaption ist üblicherweise in den Steuergeräten eine entsprechende Logik vorgesehen, die eine geeignete Anpassung der betreffenden Modellparameter vornehmen kann. Die Idee des dort erläuterten Verfahrens zur Adaption von Modellparametern eines Funktionsmodells, das Strecken oder Systemfunktionen nachbildet, besteht darin, ein Nachlernen bzw. eine nach einer Inbetriebnahme des Kraftfahrzeugs stattfindende Adaption oder Aktualisierung von Modellparametern so vorzunehmen, dass diese Modellparameter dem Kraftfahrzeug von extern bereitgestellt werden.

Aus DE 10 2015 221 819 A1 ist lediglich allgemein eine Adaption eines Basismodells über ein Korrekturmodell beschrieben für Kraftfahrzeuge, woraus zunächst hervorgeht, dass bislang keine zufriedenstellenden Verfahren bekannt sind, in einer Modellberechnungseinheit implementierte, datenbasierte Funktionsmodelle zu adaptieren, d.h. zur Laufzeit zu modifizieren. Grundsätzlich ist die Möglichkeit bekannt, ein datenbasiertes Basismodell mit Hilfe eines additiven Fehlermodells zu adaptieren. Mittels einem kontinuierlichen Durchführen des dort beschriebenen Adaptionsverfahrens während des laufenden Betriebs soll eine Konvergenz des Korrekturmodells herbeigeführt werden, um ein adaptiertes Basisfunktionsmodell zu erstellen, das dem Systemverhalten bestmöglich entspricht.

In Bezug auf das eingangs genannte Verfahren beschreibt zwar US 2011/0172897 A1 ein Verfahren zur Adaption des Spritzbeginns sowie der Spritzmenge über Verbrennungsmodelle mittels neuronaler Netze. Da lediglich trainierte Daten abgebildet werden, müssen diese zuerst bei einem Prüfstandslauf gelernt werden.

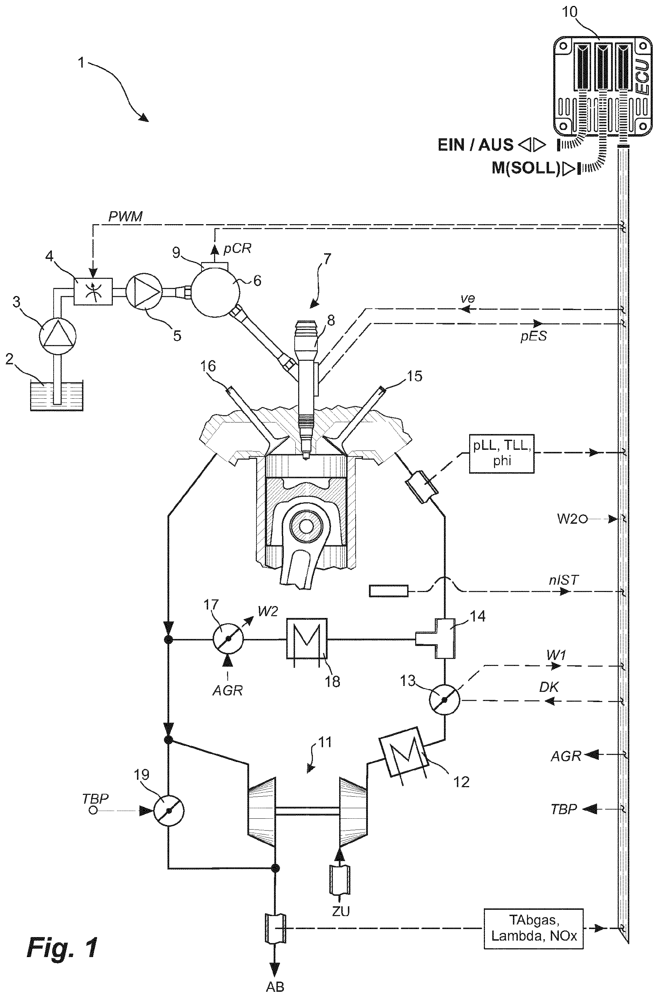

Ein generelles Prinzip einer nicht-linearen Modell basierten prädiktiven Steuerung einer Dieselmaschine der eingangs genannten Art ist im Kern beschrieben in Karsten Harder et al.: "Nonlinear MPC with Emission Control for a Real-World Off-Highway Diesel Engine", 2017 IEEE International Conference on Advanced Intelligent Mechatronics (AIM), Munich, Germany 3.-7. Juli 2017 (2017-07-03), Seiten 1768 - 1773, XP033144574, DOI:10,1109/AIM, 2017, 8014274, ISBN; 978-1-5090-5998-0 [gefunden am 2017-08-21]. Dort wird in III ein Echtzeit-MPC-Algorithmus beschrieben in Bezug auf eine dort in Fig. 1 im Prizip angegebene Steuerungsschleife.

In WO 2017/094349 A1 wird ein Verbrennungsmotor-Steuergerät beschrieben, mit dem es möglich ist, zur Steuerung eines Verbrennungsmotors erforderliche Motorparameter, insbesondere Verbrennungsparameter, basierend auf einem Erfassungsergebnis eines Zylinderdrucksensors, in Echtzeit genau zu berechnen, und womit es somit möglich ist, die Regelbarkeit der Brennkraftmaschine zu verbessern. Eine Steuervorrichtung für einen Verbrennungsmotor weist auf: einen Zylinderdrucksensor, der den Zylinderdruck in einem Zylinder erfasst; ein Anlagenmodell, das in einer elektronischen Steuereinheit bereitgestellt wird, ein Verbrennungsmodell zur Berechnung einer Wärmefreisetzungsrate unter Verwendung des erfassten Zylinderdrucks und Motorparameter umfassend Wärmefreisetzungsrate, Ansaugkrümmerdruck, AGR-Temperatur und AGR-Druck, die den Zustand des Verbrennungsmotors darstellen, einschließlich der Wärmefreisetzungsrate; und ein Motorsteuergerät, das im elektronischen Steuergerät vorgesehen ist und den Verbrennungsmotor anhand der vom Anlagenmodell berechneten Motorparameter steuert.

Aus der nicht vorveröffentlichten deutschen Patentanmeldung DE 10 2017 005 783.4 ist ein modellbasiertes Steuerungs- und Regelungsverfahren für eine Brennkraftmaschine bekannt, bei dem über ein Verbrennungsmodell Einspritzsystem-Sollwerte zur Ansteuerung der Einspritzsystem-Stellglieder und über ein Gaspfadmodell Gaspfad-Sollwerte zur Ansteuerung der Gaspfad-Stellglieder berechnet werden. Von einem Optimierer werden dann diese Sollwerte mit dem Ziel verändert, ein Gütemaß innerhalb eines Prädiktionshorizonts zu minimieren. Das minimierte Gütemaß definiert dann den bestmöglichen Betriebspunkt der Brennkraftmaschine. Hinsichtlich eines deutlich verringerten Abstimmungsaufwands hat sich das dargestellte Verfahren zwar bewährt, bietet jedoch noch Optimierungspotential.

Aus DE 10 2015 225 279 A1 ist ebenfalls ein modellbasiertes Steuerungs- und Regelungsverfahren bekannt, bei dem eine Zeitskalentrennung der Regelmodule und eine Modelladaption zur Anpassung von Abweichungen der einzelnen Motoren oder Motoralterung vorgesehen ist. So wird beispielsweise für das Einspritzmanagement (Spritzbeginn, Spritzende) ein schnelle Prozesszeit, für die Abgasrückführung eine mittlere Prozesszeit und für die Abgasnachbehandlung eine längere Prozesszeit angesetzt. Auch kann statt Momente bei einem Momentenregler eine Drehzahlabweichung bei einem Drehzahlregler minimiert werden. Es können, zum Berechnen, die kennzeichnenden Größen eines globalen Modells der Brennkraftmaschine in Echtzeit auf einem Motorsteuergerät (ECU) für die gesamte Brennkraftmaschine im Rahmen eines nichtlinearen modellbasierten prädikitiven Regelns berechnet werden.

Der Erfindung liegt daher die Aufgabe zugrunde, das zuvor beschriebene Verfahren hinsichtlich einer besseren Güte weiterzuentwickeln.

Gelöst wird diese Aufgabe durch die Merkmale von Anspruch 1. Ausgestaltungen des erfindungsgemäßen Verfahrens sind in den Unteransprüchen dargestellt.

Beim erfindungsgemäßen Verfahren werden anhand eines Sollmoments über ein Verbrennungsmodell Einspritzsystem-Sollwerte zur Ansteuerung der Einspritzsystem-Stellglieder und über ein Gaspfadmodell Gaspfad-Sollwerte zur Ansteuerung der Gaspfad-Stellglieder berechnet, wobei das Verbrennungsmodell im laufenden Betrieb der Brennkraftmaschine adaptiert wird. Ferner wird bei diesem Verfahren von einem Optimierer ein Gütemaß in Abhängigkeit der Einspritzsystem- und der Gaspfad-Sollwerte berechnet und vom Optimierer das Gütemaß über Veränderung der Einspritzsystem-Sollwerte und Gaspfad-Sollwerte innerhalb eines Prädiktionshorizonts minimiert. Ist ein minimiertes Gütemaß dann bestimmt, so setzt der Optimierer letztendlich die Einspritzsystem- und Gaspfad-Sollwerte als maßgeblich zur Einstellung des Betriebspunkts der Brennkraftmaschine.

Gemäß der Erfindung wird das Verbrennungsmodell adaptiert über ein erstes Gauß-Prozessmodell zur Darstellung eines Grundgitters und über ein zweites Gauß-Prozessmodell zur Darstellung von Adaptionsdatenpunkten.

Insbesondere werden die Daten für das erste Gauß-Prozessmodell auf einem Einzylinderprüfstand gewonnen. Auf dem Einzylinderprüfstand können extreme Betriebsbedingungen eingestellt werden, zum Beispiel eine sehr kalte Umgebung oder eine sehr große geodätische Höhe. Über eine anschließende physikalische Modellierung werden alle Eingangsgrößen durchvariiert, um den gesamten Arbeitsbereich der Brennkraftmaschine abzudecken. Systembedingt bilden die Datenwerte im ersten Gauß-Prozessmodell das Motorsystem im normalen Betriebsbereich nur grob ab. Von Vorteil allerdings ist, dass mittels des ersten Gauß-Prozessmodells ein Grundgitter mit wenig Stützstellen aber einem physikalisch sinnvollen Extrapolationsverhalten abgebildet wird. Die Daten für das zweite Gauß-Prozessmodell werden aus einem DoE-Prüfstandslauf der Brennkraftmaschine mit stationär fahrbarem Bereich erzeugt. Systembedingt sind daher die Datenwerte im zweiten Gauß-Prozessmodell nur für diesen stationären Bereich gültig, wenngleich mit hoher Güte. Die Kombination des ersten und des zweiten Gauß-Prozessmodells beinhaltet daher Betriebsbereiche mit real gemessenen und extrapolierten Datenwerten.

Gemäß der Erfindung wird die Güte des zweiten Gauß-Prozessmodells anhand eines Konfidenzbereichs beurteilt.

So bildet ein schmaler Konfidenzbereich eine hohe Güte ab, während hingegen ein breiter Konfidenzbereich eine geringere Güte darstellt. Im laufenden Betrieb wird die Lage eines aktuellen Adaptionsdatenpunkts hinsichtlich seiner Lage zum gültigen Konfidenzbereich beurteilt. Bevorzugt entspricht der Konfidenzbereich der zweifachen Standardabweichung, also einem 95 %-Konfidenzbereich.

Liegt der aktuelle Adaptionsdatenpunkt innerhalb des Konfidenzbereichs, so ergänzt er gemäß der Erfindung das zweite Gauß-Prozessmodell. Liegt der aktuelle Adaptionsdatenpunkt außerhalb des gültigen Konfidenzbereichs, so wird gemäß einer Weiterbildung das zweite Gauß-Prozessmodell verändert, indem Adaptionsdatenpunkte aus dem zweiten Gauß-Prozessmodell solange entfernt werden, bis der aktuelle Adaptionsdatenpunkt innerhalb des neuen Konfidenzbereichs liegt.

Zur Reduktion des Speicheraufwands und zur Verringerung der Rechenzeit wird die Gesamtanzahl der Adaptionsdatenpunkte mit einem Grenzwert verglichen. Bei Grenzwertüberschreitung werden Adaptionsdatenpunkte in der Anzahl entfernt, so dass die neue Gesamtanzahl kleiner als der Grenzwert wird. Entfernt werden diejenigen Adaptionsdatenpunkte, die einen geringen oder keinen Einfluss auf die Güte des zweiten Gauß-Prozessmodells haben.

Ebenfalls zur Verringerung der Rechenzeit ist vorgesehen, dass das erste Gauß-Prozessmodell zur Darstellung eines Grundgitters über das zweite Gauß-Prozessmodell rückangepasst wird. Der Rückanpassung liegt die Forderung zugrunde, dass der zweite Gaußprozess an den Stützstellen des ersten Gaußprozesses gleich Null ist. Bei der Rückanpassung erhält jeder Datenpunkt des ersten Gauß-Prozessmodells einen Zeitstempel eingeprägt. Anhand der zeitlichen Veränderung des Zeitstempels lässt sich ein Zeitrang bestimmen. Aus dem Zeitrang wiederum kann ein Zeitraum für den Weiterbetrieb der Brennkraftmaschine abgeschätzt werden. Mit anderen Worten: Ein zum Beispiel defekter NOx-Sensor bewirkt eine zeitliche Drift des Mittelwerts im ersten Gauß-Prozessmodell. Der hierzu korrespondierende Zeitrang definiert dann den verbleibenden Restzeitraum für den modellbasierten Weiterbetrieb der Brennkraftmaschine. Über den Zeitrang lässt sich selbstverständlich auch eine nicht statthafte Manipulation der Brennkraftmaschine erkennen.

Die Erfindung bietet die bekannten Vorteile einer Adaption, nämlich eine Vereinheitlichung der Brennkraftmaschinen derselben Baureihe. Mit anderen Worten: Über die Adaption wird die Serienstreuung selbstständig verringert. Über die Rückanpassung des ersten Gauß-Prozessmodells mittels des zweiten Gauß-Prozessmodells wird ein selbstlernendes System mit Fehlererkennung abgebildet. Da die Modelle einzeln abstimmbar sind und diese in der Summe die Brennkraftmaschine abbilden, kann der Abstimmungsaufwand nochmals reduziert werden. Die bisher erforderlichen Kennlinien und Kennfelder entfallen ersatzlos. Durch die Extrapolationsfähigkeit der Modelle werden sowohl im dynamischen, transienten Betrieb oder in selten eingestellten Betriebsbereichen belastbare Motorstellgrößen berechnet. Zudem können die Abstände der Zielwerte der Regelung zu den gesetzlichen Emissionsgrenzwerten verkleinert werden.

In den Figuren der Zeichnung ist ein bevorzugtes Ausführungsbeispiel dargestellt. Es zeigen:

Fig. 1     ein Systemschaubild,
Fig. 2     ein modellbasiertes Systemschaubild,
Fig. 3     ein Blockschaltbild,
Fig. 4     einen Programm-Ablaufplan,
Fig. 5     ein Unterprogramm,
Fig. 6     ein erstes Adaptionsbeispiel,
Fig. 7     ein zweites Adaptionsbeispiel und
Fig. 8     ein drittes Adaptionsbeispiel.

Die Fig. 1 zeigt ein Systemschaubild einer elektronisch gesteuerten Brennkraftmaschine 1 mit einem Common-Railsystem. Das Common-Railsystem umfasst folgende mechanische Komponenten: eine Niederdruckpumpe 3 zur Förderung von Kraftstoff aus einem Kraftstofftank 2, eine veränderbare Saugdrossel 4 zur Beeinflussung des durchströmenden Kraftstoff-Volumenstroms, eine Hochdruckpumpe 5 zur Förderung des Kraftstoffs unter Druckerhöhung, ein Rail 6 zum Speichern des Kraftstoffs und Injektoren 7 zum Einspritzen des Kraftstoffs in die Brennräume der Brennkraftmaschine 1. Optional kann das Common-Railsystem auch mit Einzelspeichern ausgeführt sein, wobei dann zum Beispiel im Injektor 7 ein Einzelspeicher 8 als zusätzliches Puffervolumen integriert ist. Die weitere Funktionalität des Common-Railsystems wird als bekannt vorausgesetzt.

Der dargestellte Gaspfad umfasst sowohl die Luftzuführung als auch die Abgasabführung. Angeordnet sind in der Luftzuführung der Verdichter eines Abgasturboladers 11, ein Ladeluftkühler 12, eine Drosselklappe 13, eine Einmündungsstelle 14 zur Zusammenführung der Ladeluft mit dem rückgeführten Abgas und das Einlassventil 15. In der Abgasabführung angeordnet sind ein Auslassventil 16, die Turbine des Abgasturboladers 11 und ein Turbinen-Bypassventil 19. Aus der Abgasabführung zweigt ein Abgasrückführungspfad ab, in welchem ein AGR-Stellglied 17 zur Einstellung der AGR-Rate und der AGR-Kühler 18 angeordnet sind.

Die Betriebsweise der Brennkraftmaschine 1 wird durch ein elektronisches Steuergerät 10 (ECU) bestimmt. Das elektronische Steuergerät 10 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb der Brennkraftmaschine 1 relevanten Betriebsdaten als Modelle appliziert. Über diese berechnet das elektronische Steuergerät 10 aus den Eingangsgrößen die Ausgangsgrößen. Die maßgebliche Eingangsgröße ist ein Sollmoment M(SOLL), welches von einem Bediener als Leistungswunsch vorgegeben wird. Die auf das Common-Railsystem bezogenen Eingangsgrößen des Steuergeräts 10 sind der Raildruck pCR, der mittels eines Rail-Drucksensors 9 gemessen wird, und optional der Einzelspeicherdruck pES. Die auf den Luftpfad bezogenen Eingangsgrößen des elektronischen Steuergeräts 10 sind ein Öffnungswinkel W1 der Drosselklappe 13, die Motordrehzahl nIST, der Ladeluftdruck pLL, die Ladelufttemperatur TLL und die Feuchte phi der Ladeluft. Die auf den Abgaspfad bezogenen Eingangsgrößen des elektronischen Steuergeräts 10 sind ein Öffnungswinkel W2 des AGR-Stellglieds 17, die Abgastemperatur TAbgas, das Luft-Kraftstoffverhältnis Lambda und der NOx-Istwert stromab der Turbine des Abgasturboladers 11. Die weiteren nicht dargestellten Eingangsgrößen des elektronischen Steuergeräts 10 sind mit Bezugszeichen EIN zusammengefasst, beispielsweise die Kühlmitteltemperaturen.

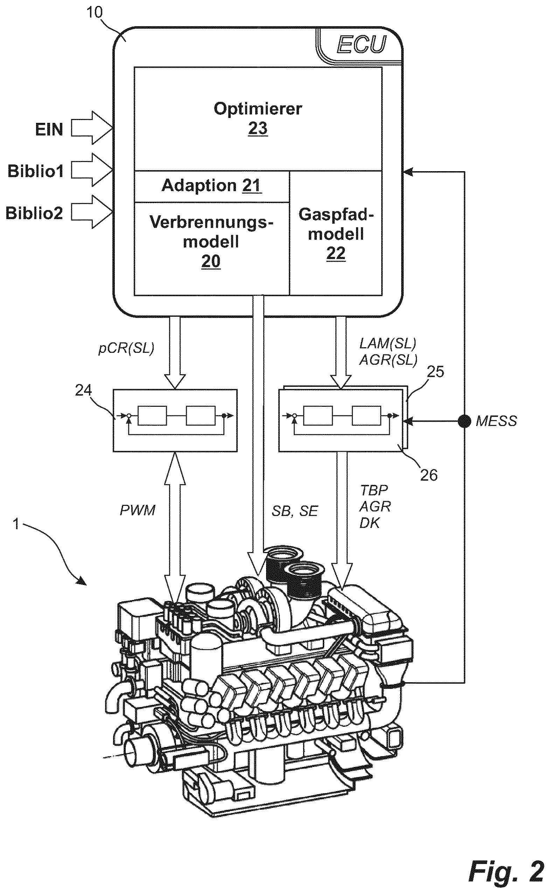

In Fig. 1 sind als Ausgangsgrößen des elektronischen Steuergeräts 10 dargestellt: ein Signal PWM zur Ansteuerung der Saugdrossel 4, ein Signal ve zur Ansteuerung des Injektors 7 (Spritzbeginn/ Spritzende), ein Stellsignal DK zur Ansteuerung der Drosselklappe 13, ein Stellsignal AGR zur Ansteuerung des AGR-Stellglieds 17, ein Stellsignal TBP zur Ansteuerung des Turbinen-Bypassventils 19 und eine Ausgangsgröße AUS. Die Ausgangsgröße AUS steht stellvertretend für die weiteren Stellsignale zur Steuerung und Regelung der Brennkraftmaschine 1, beispielsweise für ein Stellsignal zur Aktivierung eines zweiten Abgasturboladers bei einer Registeraufladung oder einem variablen Ventiltrieb. Die Fig. 2 zeigt ein modellbasiertes Systemschaubild. Bei dieser Darstellung sind die Eingangsgrößen des elektronischen Steuergeräts 10 eine erste Bibliothek Biblio1, eine zweite Bibliothek Biblio 2, Messgrößen MESS und das Sammelbezugszeichen EIN, welches stellvertretend für die in der Fig. 1 dargestellten Eingangsgrößen steht. Die erste Bibliothek Biblio 1 kennzeichnet den Betrieb der Brennkraftmaschine gemäß der Emissionsklasse MARPOL (Marine Pollution) der IMO oder gemäß der Emissionsklasse EU IV / Tier 4 final. Die zweite Bibliothek Biblio 2 kennzeichnet den Brennkraftmaschinentyp und eine maximale mechanische Bauteilbelastung, zum Beispiel den Verbrennungsspitzendruck oder die maximale Drehzahl des Abgasturboladers. Die Eingangsgröße MESS kennzeichnet die sowohl unmittelbar gemessenen physikalischen Größen als auch daraus berechnete Hilfsgrößen. Die Ausgangsgrößen des elektronischen Steuergeräts sind die Sollwerte für die unterlagerten Regelkreise, der Spritzbeginn SB und das Spritzende SE. Innerhalb des elektronischen Steuergeräts sind ein Verbrennungsmodell 20, eine Adaptation 21, ein Gaspfadmodell 22 und ein Optimierer 23 angeordnet.

Sowohl das Verbrennungsmodell 20 als auch das Gaspfadmodell 22 bilden das Systemverhalten der Brennkraftmaschine als mathematische Gleichungen ab. Das Verbrennungsmodell 20 bildet statisch die Vorgänge bei der Verbrennung ab. Im Unterschied hierzu bildet das Gaspfadmodell 22 das dynamische Verhalten der Luftführung und der Abgasführung ab. Das Verbrennungsmodell 20 beinhaltet Einzelmodelle zum Beispiel für die NOx- und Rußentstehung, für die Abgastemperatur, für den Abgasmassenstrom und für den Spitzendruck. Diese Einzelmodelle wiederum hängen ab von den Randbedingungen im Zylinder und den Parametern der Einspritzung. Bestimmt wird das Verbrennungsmodell 20 bei einer Referenz-Brennkraftmaschine in einem Prüfstandslauf, dem sogenannte DoE-Prüfstandslauf (DoE: Design of Experiments). Beim DoE-Prüfstandslauf werden systematisch Betriebsparameter und Stellgröße mit dem Ziel variiert, das Gesamtverhalten der Brennkraftmaschine in Abhängigkeit von motorischen Größen und Umweltrandbedingungen abzubilden. Ergänzt wird das Verbrennungsmodell 20 um die Adaption 21. Ziel der Adaption ist es, die Serienstreuung einer Brennkraftmaschine zu verringern.

Nach Aktivierung der Brennkraftmaschine 1 liest der Optimierer 23 zunächst aus der ersten Bibliothek Biblio 1 die Emissionsklasse und aus der zweiten Bibliothek Biblio 2 die maximalen mechanischen Bauteilbelastungen ein. Anschließend wertet der Optimierer 23 das Verbrennungsmodell 20 aus und zwar hinsichtlich des Sollmoments M(SOLL), der Emissionsgrenzwerte, der Umweltrandbedingungen, zum Beispiel der Feuchte phi der Ladeluft, der Betriebssituation der Brennkraftmaschine und der Adaptionsdatenpunkte. Definiert wird die Betriebssituation insbesondere durch die Motordrehzahl nIST, die Ladelufttemperatur TLL und den Ladeluftdruck pLL. Die Funktion des Optimierers 23 besteht nun darin die Einspritzsystem-Sollwerte zur Ansteuerung der Einspritzsystem-Stellglieder und die Gaspfad-Sollwerte zur Ansteuerung der Gaspfad-Stellglieder zu bewerten. Hierbei wählt der Optimierer 23 diejenige Lösung aus, bei der ein Gütemaß minimiert wird. Berechnet wird das Gütemaß als Integral der quadratischen Soll-Istabweichungen innerhalb des Prädiktionshorizonts. Beispielsweise in der Form:

$$(1) \qquad J = \int [w1(NOx(SOLL)\text{-}NOx(IST)]^2 + [w2(M(SOLL)\text{-}M(IST)]^2 + [w3(\ldots.)] + \ldots$$

Hierin bedeuten w1, w2 und w3 ein entsprechender Gewichtungsfaktor. Bekanntermaßen ergeben sich die Stickoxidemission aus der Feuchte phi der Ladeluft, der Ladelufttemperatur, dem Spritzbeginn SB und dem Raildruck pCR. In die tatsächlichen Istwerte, zum Beispiel den NOx-Istwert oder dem Abgastemperatur-Istwert, greift die Adaption 21 ein.

**EP 3 762 597 B1**

Minimiert wird das Gütemaß, indem vom Optimierer 23 zu einem ersten Zeitpunkt ein erstes Gütemaß berechnet wird, die Einspritzsystem-Sollwerte sowie die Gaspfad-Sollwerte variiert werden und anhand dieser ein zweites Gütemaß innerhalb des Prädiktionshorizonts prognostiziert wird. Anhand der Abweichung der beiden Gütemaße zueinander legt dann der Optimierer 23 ein minimales Gütemaß fest und setzt dieses als maßgeblich für die Brennkraftmaschine.

Für das in der Zeichnung dargestellte Beispiel sind dies für das Einspritzsystem der Soll-Raildruck pCR(SL) und der Spritzbeginn SB sowie das Spritzende SE. Der Soll-Raildruck pCR(SL) ist die Führungsgröße für den unterlagerten Raildruck-Regelkreis 24. Die Stellgröße des Raildruck-Regelkreises 24 entspricht dem PWM-Signal zu Beaufschlagung der Saugdrossel. Mit dem Spritzbeginn SB und dem Spritzende SE wird der Injektor (Fig. 1: 7) unmittelbar beaufschlagt.

Für den Gaspfad bestimmt der Optimierer 23 mittelbar die Gaspfad-Sollwerte. Bei dem dargestellten Beispiel sind dies ein Lamda-Sollwert LAM(SL) und ein AGR-Sollwert AGR(SL) zur Vorgabe für den unterlagerten Lambda-Regelkreis 25 und den unterlagerten AGR-Regelkreis 26. Die Stellgrößen der beiden Regelkreise 25 und 26 entsprechen dem Signal TBP zur Ansteuerung des Turbinen-Bypasses, dem Signal AGR zur Ansteuerung des AGR-Stellglieds und dem Signal DK zur Ansteuerung der Drosselklappe. Die rückgeführten Messgrößen MESS werden vom elektronischen Steuergerät 10 eingelesen. Unter den Messgrößen MESS sind sowohl unmittelbar gemessene physikalische Größen als auch daraus berechnete Hilfsgrößen zu verstehen. Bei dem dargestellten Beispiel werden der Lamda-Istwert LAM(IST) und der AGR-Istwert AGR(IST) eingelesen.

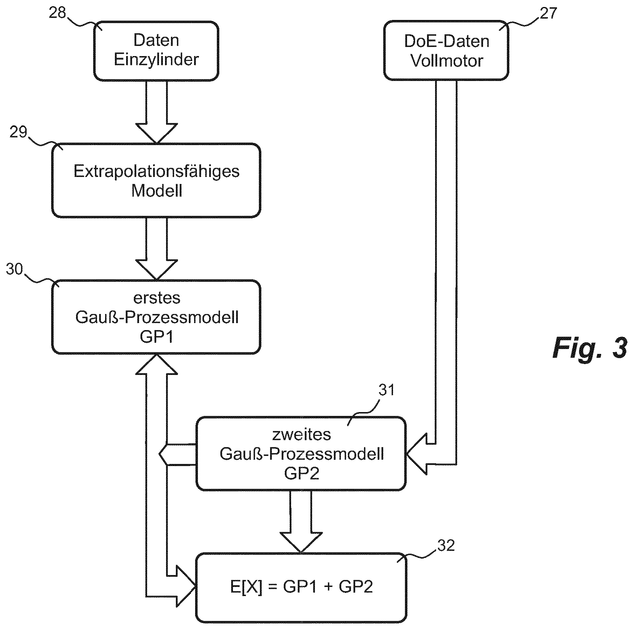

Die Fig. 3 zeigt in einem Blockschaltbild das Zusammenwirken der beiden Gauß-Prozessmodelle zur Adaption des Verbrennungsmodells. Gauß-Prozessmodelle sind dem Fachmann bekannt, zum Beispiel aus der DE 10 2014 225 039 A1 oder der DE 10 2013 220 432 A1. Ganz allgemein wird ein Gaußprozess definiert durch eine Mittelwertfunktion und eine Kovarianzfunktion. Die Mittelwertfunktion wird häufig zu Null angenommen oder ein linearer/polynomieller Verlauf eingeführt. Die Kovarianzfunktion gibt den Zusammenhang beliebiger Punkte an. Ein erster Funktionsblock 27 beinhaltet die DoE-Daten (DoE: Design of Experiments) des Vollmotors. Ermittelt werden diese Daten für eine Referenz-Brennkraftmaschine bei einem Prüfstandslauf, indem im stationär fahrbaren Bereich der Brennkraftmaschine alle Variationen der Eingangsgrößen über deren gesamten Stellbereich ermittelt werden. Diese Daten kennzeichnet mit hoher Genauigkeit das Verhalten der Brennkraftmaschine im stationär fahrbaren Bereich. Ein zweiter Funktionsblock 28 beinhaltet Daten, welche an einem Einzylinderprüfstand gewonnen werden. Beim Einzylinderprüfstand lassen sich diejenigen Betriebsbereiche einstellen, zum Beispiel große geodätische Höhe oder extreme Temperaturen, die bei einem DoE-Prüfstandslauf nicht abgeprüft werden können. Diese wenigen Messdaten dienen als Grundlage für die Parametrierung eines physikalischen Modells, welches das globale Verhalten der Verbrennung grob richtig wiedergibt. Das physikalische Modell stellt das Verhalten der Brennkraftmaschine in extremen Randbedingungen grob dar. Über Extrapolation wird das physikalische Modell vervollständigt, sodass einnormaler Betriebsbereich grob richtig beschrieben wird. In der Fig. 3 ist das extrapolationsfähige Modell mit dem Bezugszeichen 29 gekennzeichnet. Aus diesem wiederum wird das erste Gauß-Prozessmodell 30 (GP1) zur Darstellung eines Grundgitters erzeugt.

Die Zusammenführung der beiden Mengen von Datenpunkten bildet das zweite Gauß-Prozessmodell 31. Damit werden Betriebsbereiche der Brennkraftmaschine, welche durch die DoE-Daten beschrieben sind, auch durch diese Werte festgelegt und werden Betriebsbereiche, für die keine DoE-Daten vorliegen, durch Daten des physikalischen Modells wiedergegeben. Da das zweite Gauß-Prozessmodell im laufenden Betrieb adaptiert wird, dient es zur Darstellung der Adaptionspunkte. Ganz allgemein gilt also für den Modellwert (Bezugszeichen 32):

$$(2) \qquad E[x] = GP1 + GP2$$

Hierbei entsprechen GP1 dem ersten Gauß-Prozellmodell zur Darstellung des Grundgitters, GP2 dem zweiten Gauß-Prozessmodell zur Darstellung der Adaptionsdatenpunkte und der Modellwert E[x] der Eingangsgröße für den Optimierer, zum Beispiel einem NOx-Istwert oder einem Abgastemperatur-Istwert. Durch den Doppelpfeil in der Fig. 3 sind zwei Informationswege dargestellt. Der erste Informationsweg kennzeichnet die Datenbereitstellung des Grundgitters vom ersten Gauß-Prozessmodell 30 an den Modellwert 32. Der zweite Informationsweg kennzeichnet die Rückanpassung des ersten Gauß-Prozessmodells 30 über das zweite Gauß-Prozessmodell 31.

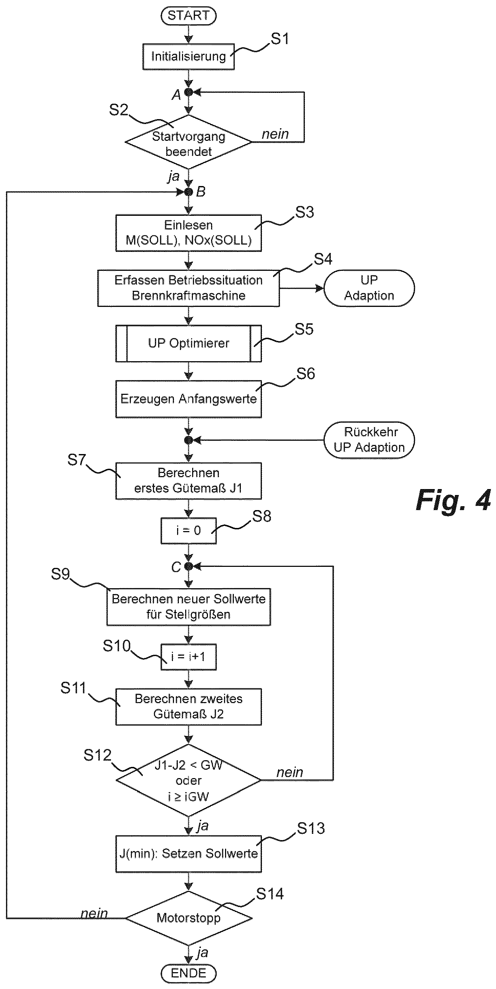

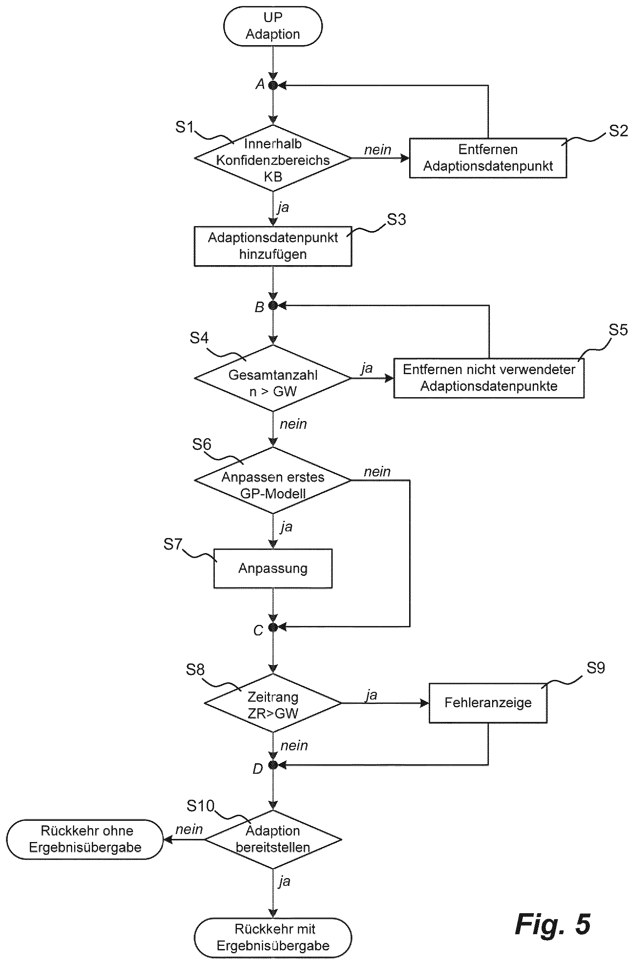

In der Fig. 4 ist in einem Programm-Ablaufplan ein Hauptprogramm dargestellt, über welches der Optimierer innerhalb eines Prädiktionshorizonts das Gütemaß J optimiert. Mit zu diesem Hauptprogramm gehört ein Unterprogramm UP Adaption, über welches adaptierte Werte für den Optimierer bereitgestellt werden. Das Unterprogramm UP Adaption weist eine längere Durchlaufzeit als das Hauptprogramm auf, das heißt, nicht bei jedem Durchlauf des Hauptprogramms werden neue adaptierte Werte bereitgestellt. Nach der Initialisierung bei S1 wird bei S2 geprüft ob der Startvorgang beendet ist. Läuft dieser noch, Abfrageergebnis S2: nein, wird zum Punkt A zurückverzweigt. Ist der Startvorgang beendet, so wird bei S3 das vom Bediener vorgebbare Sollmoment M(SOLL) und der NOx-Sollwert NOx(SOLL) eingelesen. Im Anschluss daran wird bei S4 die Betriebssituation der Brennkraftmaschine erfasst. Definiert wird die Betriebssituation über die Messgrößen, insbesondere über die Motordrehzahl nIST, die Ladelufttemperatur TLL, den Ladeluftdruck pLL und die Feuchte phi der Ladeluft. Die Betriebssituation wird zum einen in einem Unterprogramm Optimierer, Schritt S5, und zum anderen im Unterprogramm UP Adaption weiterverarbeitet. Das Unterprogramm wird in Verbindung mit der Fig. 5 erklärt.

Nach Aufruf des Unterprogramms UP Optimierer werden bei S6 die Anfangswerte, zum Beispiel der Spritzbeginn SB, erzeugt. Ein erstes Gütemaß J1 wird anhand der Gleichung (1) bei S7 berechnet und bei S8 eine Laufvariable i auf null gesetzt. Danach werden bei S9 die Anfangswerte verändert und als neue Sollwerte für die Stellgrößen berechnet. Bei S10 wird die Laufvariable i um eins erhöht. Anhand der neuen Sollwerte wird dann bei S11 ein zweites Gütemaß J2 für den Prädiktionshorizont, zum Beispiel für die nächsten 8 Sekunden, prognostiziert. Bei S12 wiederum wird das zweite Gütemaß J2 vom ersten Gütemaß J1 subtrahiert und mit einem Grenzwert GW verglichen. Über die Differenzbildung der beiden Gütemaße wird der weitere Fortschritt des Gütemaßes abgeprüft. Alternativ wird anhand des Vergleichs der Laufvariablen i mit einem Grenzwert iGW geprüft, wie oft bereits eine Optimierung durchlaufen wurde. Die beiden Grenzwertbetrachtungen sind insofern ein Abbruchkriterium für eine weitere Optimierung. Ist eine weitere Optimierung möglich, Abfrageergebnis S12: nein, so wird zum Punkt C zurück verzweigt. Anderenfalls wird bei S13 vom Optimierer das zweite Gütemaß J2 als minimales Gütemaß J(min) gesetzt. Aus dem minimalen Gütemaß J(min) resultieren dann die Einspritzsystem-Sollwerte und die Gaspfad-Sollwerte zur Vorgabe für die entsprechenden Stellglieder. Im Anschluss daran wird bei S14 geprüft, ob ein Motorstopp initiiert wurde. Ist dies nicht der Fall, Abfrageergebnis S14: nein, wird zum Punkt B zurückverzweigt. Anderenfalls ist der Programm-Ablaufplan beendet. Eine detaillierte Beschreibung zum Wirkprinzip des Optimierers einschließlich Prädiktion ist aus der nicht vorveröffentlichte Patentanmeldung mit dem amtlichen Aktenzeichen DE 10 2017 005 783.4 bekannt, auf die hiermit verwiesen wird.

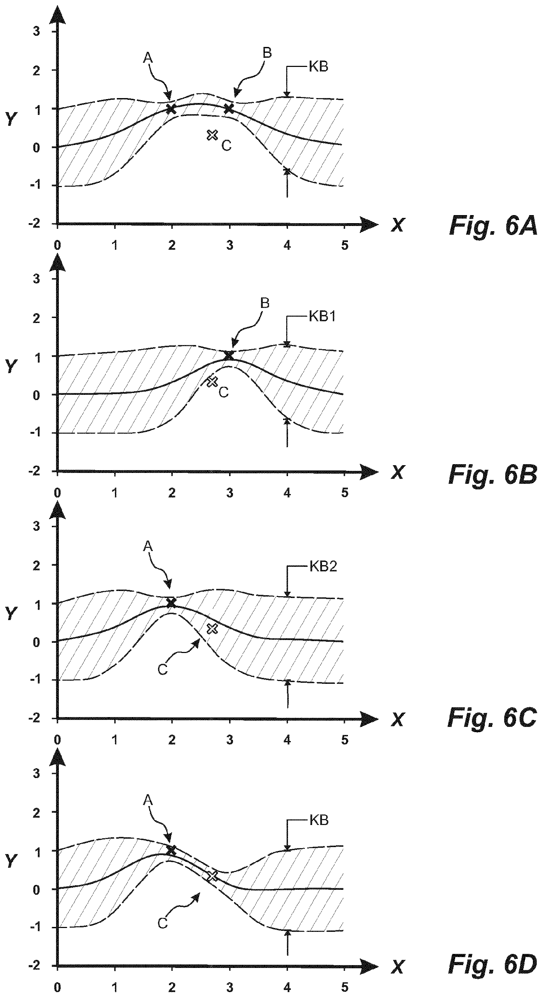

In der Fig. 5 ist das Unterprogramm UP Adaption dargestellt. Bei S1 wird geprüft, ob der aktuelle Datenpunkt innerhalb des gültigen Konfidenzbereichs KB liegt. Liegt dieser außerhalb des gültigen Konfidenzbereichs KB, Abfrageergebnis S1: nein, so wird zu S2 verzweigt und ein bereits abgespeicherter Adaptionsdatenpunkt entfernt. Danach wird zum Punkt A zurückverzweigt und erneut bei S1 geprüft, ob nunmehr der aktuelle Adaptionsdatenpunkt im neuen Konfidenzbereichs liegt. Dieser Fall ist in der Fig. 6 dargestellt und wird in Verbindung mit der Fig. 6 erläutert. In der Schleife S1 und S2 werden also Adaptionsdatenpunkte solange aus dem zweiten Gauß-Prozessmodell entfernt bis der aktuelle Adaptionsdatenpunkt innerhalb des neuen Konfidenzbereichs liegt. Wurde bei S1 festgestellt, dass der aktuelle Datenpunkt innerhalb des Konfidenzbereichs KB liegt, Abfrageergebnis S1: ja, so wird bei S3 der aktuelle Adaptionsdatenpunkt dem zweiten Gauß-Prozessmodell hinzugefügt. Anschließend wird bei S4 geprüft, ob die Gesamtanzahl n der Adaptionsdatenpunkte größer als ein Grenzwert GW ist. Ist dies nicht der Fall, Abfrageergebnis S4: nein, so wird der Programmablauf bei S6 fortgesetzt. Anderenfalls wird bei S5 derjenige Adaptionsdatenpunkt entfernt, der den Mittelwert am wenigsten beeinflusst. Anschließend wird zum Punkt B zurückverzweigt und bei S4 erneut die Gesamtanzahl n abgefragt. Über die Schleife S4/S5 werden daher so viele Adaptionsdatenpunkte aus dem zweiten Gauß-Prozessmodell entfernt bis die Gesamtanzahl n unterhalb des Grenzwerts GW liegt. Von Vorteil sind ein reduzierter Speicheraufwand und eine schnellere Durchlaufzeit.

Bei S6 wird geprüft, ob das erste Gauß-Prozessmodell zur Darstellung des Grundgitters angepasst werden muss. Ist dies nicht erforderlich, Abfrageergebnis S6: nein, so wird der Programmablauf beim Punkt C fortgesetzt. Ist eine Anpassung erforderlich, Abfrageergebnis S6: ja, so wird das erste Gauß-Prozessmodell in der Form angepasst, dass der Erwartungswert des ersten Gauß-Prozessmodells über das zweite Gauß-Prozessmodell rückangepasst wird. Danach wird der Programmablauf beim Punkt C fortgesetzt. Bei S8 wird ein Zeitrang ZR auf Grenzwertüberschreitung geprüft. Jedem Datenpunkt im ersten Gauß-Prozessmodell wird ein Zeitstempel eingeprägt. Eine Veränderung des Datenpunkts, also eine zeitliche Drift, verändert den Zeitrang. Wird bei S8 festgestellt, dass der Zeitrang ZR größer als der Grenzwert GW ist, Abfrageergebnis S8: ja, so wird bei S9 ein Warnhinweis sowie die verbleibende Restnutzungsdauer ausgegeben und der Programmablauf bei S10 fortgesetzt. Wird hingegen bei S8 festgestellt, dass der Zeitrang ZR kleiner als der Grenzwert GW ist, Abfrageergebnis S8: nein, so wird der Programmablauf beim Punkt D und S10 fortgesetzt. Über die Abfrage des Zeitrangs kann ein Sensor-Ausfall, zum Beispiel des NOx-Sensors, erkannt werden. Ebenso kann hierdurch eine nicht statthafte Manipulation der Brennkraftmaschine erkannt werden. Anhand des Zeitrangs wird abgeschätzt wie lange ein modellbasierter Weiterbetrieb der Brennkraftmaschine trotz Sensordefekts noch möglich ist. Bei S10 wird geprüft, ob die adaptierten Werte im Hauptprogramm verwendet werden sollen. Bei positiven Prüfung, Abfrageergebnis S10: ja, erfolgt eine Rückkehr ins Hauptprogramm der Fig. 4 mit Ergebnisübergabe ans Hauptprogramm. Bei negativer Prüfung, Abfrageergebnis S10: nein, erfolgt eine Rückkehr ins Hauptprogramm der Fig. 4 ohne Ergebnisübergabe ans Hauptprogramm.

In der Fig. 6 ist der Fall dargestellt, dass der aktuelle Adaptionsdatenpunkt nicht im gültigen Konfidenzbereichs liegt. Definiert wird der gültige Konfidenzbereichs anhand der Mittelwerts MW (Erwartungswert My) und der Kovarianz (Sigma$^2$). Die Fig. 6 umfasst die Fig. 6A bis Fig. 6D. Zur besseren Darstellung sind diese zweidimensional dargestellt. Auf der Abszisse aufgetragen ist hierbei eine Größe X, welche stellvertretend für die Eingangsgrößen des Modells stehen, also zum Beispiel dem Spritzbeginn SB, dem Raildruck pCR, dem Ladeluftdruck pLL oder der Feuchte phi der Ladeluft. Auf der Ordinate dargestellt ist eine Größe Y, welche stellvertretend für adaptierbare Modellwerte steht, zum Beispiel für NOx oder die Abgastemperatur. Nicht adaptierbare Größen sind zum Beispiel der Ruß, das Moment oder der Kraftstoffverbrauch, welche ebenfalls über die Gleichung (2) dargestellt werden. In der Praxis sind die Größen X und Y also multidimensional. In der Fig. 6A dargestellt sind ein erster Adaptionsdatenpunkt A (2/1), ein zweiter Adaptionsdatenpunkt B (3/1) und ein aktueller Adaptionsdatenpunkt C (2.5/0). Der aktuelle Adaptionsdatenpunkt C liegt nicht innerhalb des gültigen Konfidenzbereichs KB, welcher in der Fig. 6 schraffiert dargestellt ist. Danach wird geprüft, wie sich der gültige Konfidenzbereich KB (Fig. 6A) durch das Entfernen des ersten Adaptionsdatenpunkts A (2/1) verändern würde. Aus der Fig. 6B wird ersichtlich, dass trotz Entfernens des ersten Adaptionsdatenpunkts A der aktuelle Adaptionsdatenpunkt C nach wie vor außerhalb des neuen Konfidenzbereichs KB 1 liegen würde. Daher wird der erste Adaptionsdatenpunkt A nicht entfernt, sondern der zweite Adaptionsdatenpunkt B (3/1). Wie in der Fig. 6C dargestellt ist, liegt nunmehr der aktuelle Adaptionsdatenwert C innerhalb des neuen Konfidenzbereichs KB2. Daher wird das zweite Gauß-Prozessmodell in der Form angepasst, dass der aktuelle Adaptionsdatenpunkt C (2.5/0) übernommen wird und der bereits abgespeicherte erste Adaptionsdatenpunkt A (2/1) verbleibt. Aufgrund der Neuberechnung ergibt sich dann ein neuer Konfidenzbereich KB, wie in der Fig. 6D dargestellt.

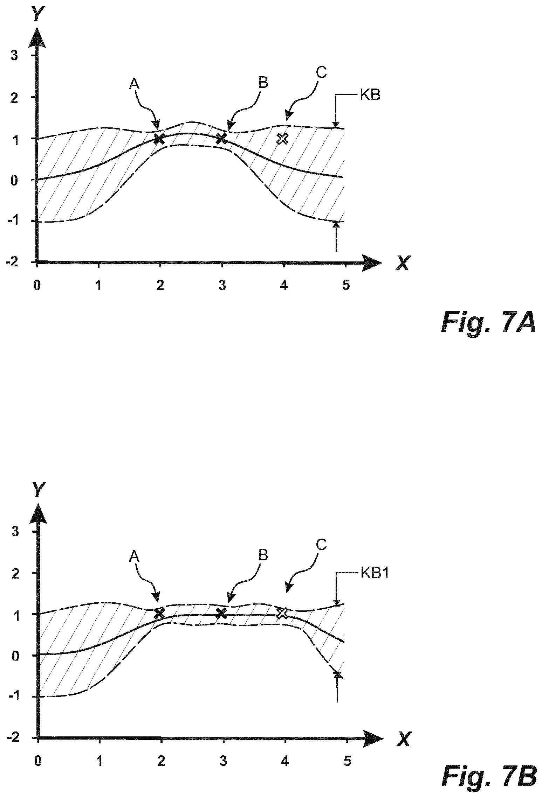

In der Fig. 7 ist der Fall dargestellt, dass der aktuelle Adaptionsdatenpunkt innerhalb des aktuellen Konfidenzbereichs KB liegt. Die Fig. 7 umfasst die Fig. 7A und Fig. 7B. Die auf der Abszisse aufgetragene Größe X und die auf der Ordinate aufgetragene Größe Y entsprechen den in der Fig. 6 beschriebenen Größen. In der Fig. 7A dargestellt sind ein erster Adaptionsdatenpunkt A (2/1), ein zweiter Adaptionsdatenpunkt B (3/1) und ein aktueller Adaptionsdatenpunkt C (4/1). Da der aktuelle Adaptionsdatenpunkt C innerhalb des gültigen Konfidenzbereichs KB liegt, wird der aktuelle Adaptionsdatenpunkt C in das zweite Gauß-Prozessmodell übernommen und anschließend der neue Konfidenzbereich KB berechnet. Aufgrund der Neuberechnung des Konfidenzbereichs ist dieser zwischen den Adaptionsdatenpunkten A bis C deutlich schmäler. Siehe hierzu Fig. 7B. Ein schmalerer Konfidenzbereich zeigt eine verbesserte Güte.

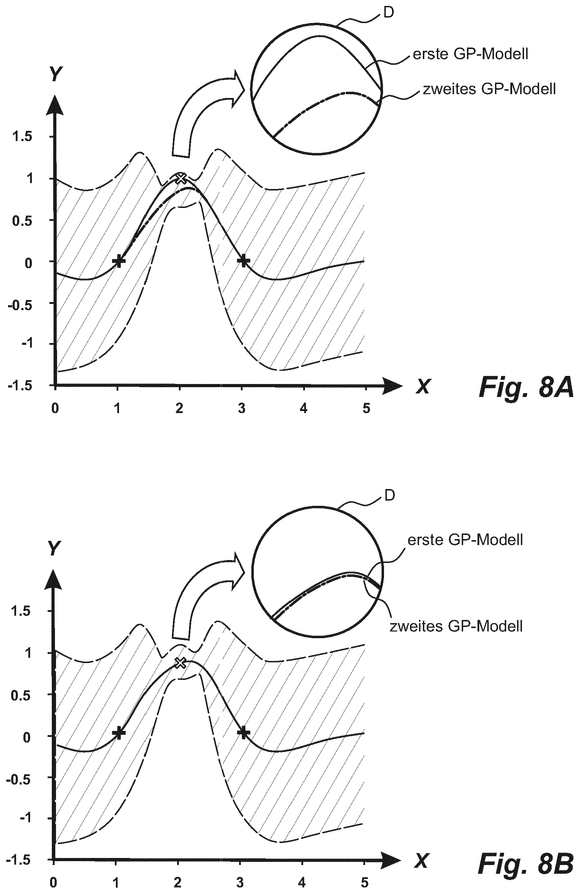

In der Fig. 8 ist der Fall einer Rückanpassung des ersten Gauß-Prozessmodells über das zweite Gauß-Prozessmodell dargestellt. Die Fig. 8 umfasst die Fig. 8A und Fig. 8B. Die Fig. 8A zeigt im Detail D, dass das erste Gauß-Prozessmodell (durchgezogene Linie) sich vom Mittelwert des zweiten Gauß-Prozessmodells (strichpunktierte Linie) unterscheidet. Die Rückanpassung geschieht in der Form, dass der Erwartungswert des ersten Gauß-Prozessmodells so angepasst wird, dass dieser den Adaptionsdatenpunkten des zweiten Gauß-Prozessmodells entspricht, siehe Fig. 8B.

BEZUGSZEICHENLISTE

| | |
|---|---|
| 1 | Brennkraftmaschine |
| 2 | Kraftstofftank |
| 3 | Niederdruckpumpe |
| 4 | Saugdrossel |
| 5 | Hochdruckpumpe |
| 6 | Rail |
| 7 | Injektor |
| 8 | Einzelspeicher |
| 9 | Rail-Drucksensor |
| 10 | Elektronisches Steuergerät |
| 11 | Abgasturbolader |
| 12 | Ladeluftkühler |
| 13 | Drosselklappe |
| 14 | Einmündungsstelle |
| 15 | Einlassventil |
| 16 | Auslassventil |
| 17 | AGR-Stellglied (AGR: Abgasrückführung) |
| 18 | AGR-Kühler |
| 19 | Turbinen-Bypassventil |
| 20 | Verbrennungsmodell |
| 21 | Adaption |
| 22 | Gaspfadmodell |
| 23 | Optimierer |
| 24 | Raildruck-Regelkreis |
| 25 | Lambda-Regelkreis |
| 26 | AGR-Regelkreis |
| 27 | Erster Funktionsblock (DoE-Daten) |
| 28 | Zweiter Funktionsblock (Daten Einzylinder) |

29 Modell
30 Erstes Gauß-Prozessmodell (GP1)
31 Zweites Gauß-Prozessmodell (GP2)
32 Modellwert

**Patentansprüche**

1. Verfahren zur modellbasierten Steuerung und Regelung einer Brennkraftmaschine (1),

   bei dem in Abhängigkeit eines Sollmoments (M(SOLL)) über ein Verbrennungsmodell (20) Einspritzsystem-Sollwerte zur Ansteuerung der Einspritzsystem-Stellglieder und über ein Gaspfadmodell (22) Gaspfad-Sollwerte zur Ansteuerung der Gaspfad-Stellglieder berechnet werden,
   bei dem das Verbrennungsmodell (20) im laufenden Betrieb der Brennkraftmaschine (1) adaptiert wird,
   bei dem von einem Optimierer (23) ein Gütemaß (J) in Abhängigkeit der Einspritzsystem-Sollwerte und der Gaspfad-Sollwerte berechnet wird,
   vom Optimierer (23) das Gütemaß (J) über Veränderung der Einspritzsystem-Sollwerte und Gaspfad-Sollwerte innerhalb eines Prädiktionshorizonts minimiert wird, und
   bei dem vom Optimierer (23) anhand des minimierten Gütemaßes (J(min)) die Einspritzsystem-Sollwerte und Gaspfad-Sollwerte als maßgeblich zur Einstellung des Betriebspunkts der Brennkraftmaschine (1) gesetzt werden, wobei
   das Verbrennungsmodell (20) über ein erstes Gauß-Prozessmodell (30) zur Darstellung eines Grundgitters und über ein zweites Gauß-Prozessmodell (31) zur Darstellung von Adaptionsdatenpunkten adaptiert wird, und
   eine Güte des zweiten Gauß-Prozessmodells (31) anhand eines Konfidenzbereichs (KB) beurteilt wird, wobei ein aktueller Adaptionsdatenpunkt, welcher innerhalb des aktuellen Konfidenzbereichs (KB) liegt, in das zweite Gauß-Prozessmodell (31) übernommen wird.

2. Verfahren nach Anspruch 1, **dadurch gekennzeichnet, dass** bei einem außerhalb des Konfidenzbereichs (KB) liegenden aktuellen Adaptionsdatenpunkt aus dem zweiten Gauß-Prozessmodell (31) zuvor gespeicherte Adaptionsdatenpunkte iterativ entfernt werden, bis der aktuelle Adaptionsdatenpunkt innerhalb des neuen Konfidenzbereichs liegt.

3. Verfahren nach Anspruch 2, **dadurch gekennzeichnet, dass**

   eine Gesamtanzahl (n) der Adaptionsdatenpunkte mit einem Grenzwert (GW) verglichen wird, und
   bei Grenzwertüberschreitung (n>GW) Adaptionsdatenpunkte in der Anzahl entfernt werden, so dass die neue Gesamtanzahl kleiner als der Grenzwert (GW) wird.

4. Verfahren nach Anspruch 3, **dadurch gekennzeichnet, dass** das erste Gauß-Prozessmodell (30) zur Darstellung eines Grundgitters über das zweite Gauß-Prozessmodell (31) rückangepasst wird.

5. Verfahren nach Anspruch 4, **dadurch gekennzeichnet, dass** jedem Datenpunkt des ersten Gauß-Prozessmodells (30) ein Zeitstempel eingeprägt wird, anhand der Veränderung des Zeitstempels ein Zeitrang (ZR) bestimmt wird und ein Weiterbetrieb der Brennkraftmaschine in Abhängigkeit des Zeitrangs (ZR) abgeschätzt wird.

**Claims**

1. Method for model-based control and regulation of a combustion engine (1),

   in which, depending on a target torque (M(TARGET)), injection system target values for activating the injection system actuators are calculated via a combustion model (20) and gas path target values for activating the gas path actuators are calculated via a gas path model (22),
   in which the combustion model (20) is adapted during the running operation of the combustion engine (1),
   in which a quality measure (J) is calculated by an optimizer (23) depending on the injection system target values and the gas path target values,
   the quality measure (J) is minimised by the optimizer (23) by changing the injection system target values and gas path target values within a prediction horizon, and
   in which the injection system target values and gas path target values are set by the optimizer (23) on the basis of the minimised quality measure (J(min)) as being decisive for setting the operating point of the combustion engine (1), wherein
the combustion model (20) is adapted via a first Gaussian process model (30) to represent a base grid and via a second Gaussian process model (31) to represent adaptation data points, and
a quality of the second Gaussian process model (31) is assessed on the basis of a confidence range (KB), wherein a current adaptation data point, which lies within the current confidence range (KB), is adopted into the second Gaussian process model (31).

2.  Method according to claim 1, **characterised in that**, when a current adaptation data point from the second Gaussian process model (31) lies outside the confidence range (KB), previously stored adaptation data points are iteratively removed until the current adaptation data point lies within the new confidence range.

3.  Method according to claim 2, **characterised in that**

    a total number (n) of the adaptation data points is compared with a limit value (GW), and
    if the limit value is exceeded (n > GW), a number of adaptation data points are removed such that the new total number is less than the limit value (GW).

4.  Method according to claim 3, **characterised in that** the first Gaussian process model (30) is readjusted via the second Gaussian process model (31) to represent a base grid.

5.  Method according to claim 4, **characterised in that** a time stamp is embossed in each data point of the first Gaussian process model (30), a time rank (ZR) is determined on the basis of the change in the time stamp and further operation of the combustion engine is estimated depending on the time rank (ZR).

**Revendications**

1.  Procédé de commande et de régulation d'un moteur à combustion interne (1) basé sur un modèle,

    dans lequel, en fonction d'un couple de consigne (M (SOLL)), des valeurs de consigne du système d'injection pour la commande des actionneurs du système d'injection sont calculées par l'intermédiaire d'un modèle de combustion (20) et des valeurs de consigne du trajet des gaz pour la commande des actionneurs du trajet des gaz sont calculées par l'intermédiaire d'un modèle de trajet des gaz (22),
    dans lequel le modèle de combustion (20) est adapté pendant le fonctionnement du moteur à combustion interne (1),
    dans lequel un optimiseur (23) calcule un facteur de mérite (J) en fonction des valeurs de consigne du système d'injection et des valeurs de consigne du trajet de gaz,
    l'optimiseur (23) minimise le facteur de mérite (J) en modifiant les valeurs de consigne du système d'injection et les valeurs de consigne du trajet de gaz dans un horizon de prédiction, et
    dans lequel, sur la base du facteur de mérite minimisé (J(min)), les valeurs de consigne du système d'injection et les valeurs de consigne du circuit de gaz sont définies par l'optimiseur (23) comme étant déterminantes pour le réglage du point de fonctionnement du moteur à combustion interne (1), où
    le modèle de combustion (20) est adapté via un premier modèle de processus gaussien (30) pour représenter une grille de base et via un deuxième modèle de processus gaussien (31) pour représenter des points de données d'adaptation, et
    une qualité du deuxième modèle de processus gaussien (31) est évaluée sur la base d'un intervalle de confiance (KB), dans lequel
    un point de données d'adaptation actuel, qui se trouve dans l'intervalle de confiance actuelle (KB) est transféré dans le second modèle de processus gaussien (31).

2.  Procédé selon la revendication 1, **caractérisé en ce que**, dans le cas d'un point de données d'adaptation actuel situé en dehors de l'intervalle de confiance (KB), des points de données d'adaptation précédemment enregistrés sont éliminés de manière itérative du deuxième modèle de processus gaussien (31) jusqu'à ce que le point de données d'adaptation actuel se trouve dans le nouvel intervalle de confiance.

3.  Procédé selon la revendication 2, **caractérisé en ce que**

un nombre total (n) de points de données d'adaptation est comparé à une valeur limite (GW), et
si la valeur limite est dépassée (n> GW), les points de données d'adaptation sont supprimés en nombre, de sorte que le nouveau nombre total soit inférieur à la valeur limite (GW).

4. Procédé selon la revendication 3, **caractérisé en ce que** le premier modèle de processus gaussien (30) est rétro-ajusté pour représenter une grille de base sur le deuxième modèle de processus gaussien (31).

5. Procédé selon la revendication 4, **caractérisé en ce qu'**un horodatage est affecté à chaque point de données du premier modèle de processus gaussien (30), un ordre chronologique (ZR) est déterminé sur la base de la modification de l'horodatage et un fonctionnement ultérieur du moteur à combustion interne est estimé en fonction de l'ordre chronologique (ZR).

**Fig. 1**

**Fig. 2**

**Fig. 3**

28 Daten Einzylinder

27 DoE-Daten Vollmotor

29 Extrapolationsfähiges Modell

30 erstes Gauß-Prozessmodell GP1

31 zweites Gauß-Prozessmodell GP2

32 E[X] = GP1 + GP2

**Fig. 4**

Fig. 5

*Fig. 6A*

*Fig. 6B*

*Fig. 6C*

*Fig. 6D*

*Fig. 7A*

*Fig. 7B*

Fig. 8A

Fig. 8B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017005337 A1
- DE 102006004516 B3
- DE 102016205241 A1
- DE 102013206308 A1
- DE 102015221819 A1
- US 20110172897 A1
- WO 2017094349 A1
- DE 102017005783
- DE 102015225279 A1
- DE 102014225039 A1
- DE 102013220432 A1

**In der Beschreibung aufgeführte Nicht-Patentliteratur**

- **KARSTEN HARDER et al.** Nonlinear MPC with Emission Control for a Real-World Off-Highway Diesel Engine. *2017 IEEE International Conference on Advanced Intelligent Mechatronics (AIM)*, 03 July 2017, ISBN 978-1-5090-5998-0, 1768-1773